# EUROPEAN PATENT APPLICATION

(11) **EP 4 826 582 A1**
(43) Date of publication of application: **21.10.2026**
(21) Application number: 24809734.7
(22) Date of filing: 30.10.2024
(51) Int. Cl.: G06F 21/57, G06F 8/65, G06F 8/71, G06F 21/60, H04L 9/30, H04L 9/40, H04L 67/12, H04L 67/00

(54) **FUNCTION MANAGEMENT SYSTEM AND FUNCTION MANAGEMENT METHOD**

(30) Priority: 14.12.2023 JP 2023210682
(71) Applicant: Robert Bosch GmbH, 70442 Stuttgart (DE)
(72) Inventor: SHU, Absalom, Yokohama-shi, Kanagawa 224-8501 (JP)
(74) Representative: Isarpatent
(86) International application number: PCT/IB2024/060699
(87) International publication number: WO 2025/125928

(57) **Abstract**

To provide a function management system and a function management method that can achieve authentication with a high security level and is highly convenient for users.

A function management system (1) according to the present invention includes: a management unit (60) that generates, in response to an input by a user, a message for revising software implemented in an electronic control device (40) constituting an in-vehicle network mounted to a vehicle; a processing unit (70) that determines a destination address of the message using metadata included in the message; and an execution unit (80) that receives the message and executes revision of the software based on core data included in the message. In the function management system, the management unit (60) generates the message after decrypting the metadata and encrypting the core data, and the processing unit (70) transmits the core data to the execution unit (80) of the electronic control device (40) determined as the destination address.

## Description

### Technical Field

The present invention relates to a function management system and a function management method.

### Background Art

In the related art, a known apparatus causes a server device to verify, by using a common key common to a plurality of electronic control units mounted to a vehicle, the validity of each of the electronic control units (see PTL 1). The apparatus described in PTL 1 is configured to allow the electric control unit authenticated by the server device to update an update firmware or the like.

### Citation List

### Patent Literature

PTL 1: JP 2017-017616 A

### Summary of Invention

### Technical Problem

The apparatus described in PTL 1 employs a method in which, after a signature is verified by a key management device, a re-signed update firmware which has been re-signed with a common key common to the electric control units (ECU) is once returned to a gateway ECU, and then is transmitted to a corresponding ECU. That is, there is a plurality of authentication steps before the update firmware is transmitted to the corresponding ECU, and thus the processing load of the apparatus is large. In addition, since data needs to be copied in different nodes, highly-frequent synchronization is required, and consequently data inconsistency may occur in the authentication steps.

Therefore, an object of the invention is to provide a function management system and a function management method that can implement authentication with a high security level and is highly convenient for users.

### Solution to Problem

In order to achieve the above-described object, an aspect of the invention provides a function management system including: a management unit that generates, in response to an input by a user, a message for revising software implemented in an electronic control device constituting an in-vehicle network mounted to a vehicle; a processing unit that determines a destination address of the message using metadata included in the message; and an execution unit that receives the message and executes revision of the software based on core data included in the message. In the function management system, the management unit generates the message after decrypting the metadata and encrypting the core data, and the processing unit transmits the core data to the execution unit of the electronic control device determined as the destination address.

### Advantageous Effects of Invention

According to the invention, it is possible to provide a function management system that can implement authentication with a high security level and can rapidly execute the update of a function, and a method for achieving the same.

### Brief Description of Drawings

Fig. 1 is a diagram schematically illustrating a configuration example of a function management system according to an embodiment of the invention.
Fig. 2 is a block diagram schematically illustrating respective main configurations of a management unit, a processing unit, and an execution unit in Fig. 1.
Fig. 3 is a sequence diagram illustrating a first embodiment of authentication processing in a server apparatus, a gateway, and an electronic control device executed by the function management system of Fig. 1.
Fig. 4 is a sequence diagram illustrating a second embodiment of authentication processing in the server apparatus, the gateway, and the electronic control device executed by the function management system of Fig. 1.
Fig. 5 is a sequence diagram illustrating a third embodiment of authentication processing in the server apparatus, the gateway, and the electronic control device executed by the function management system of Fig. 1.

### Description of Embodiments

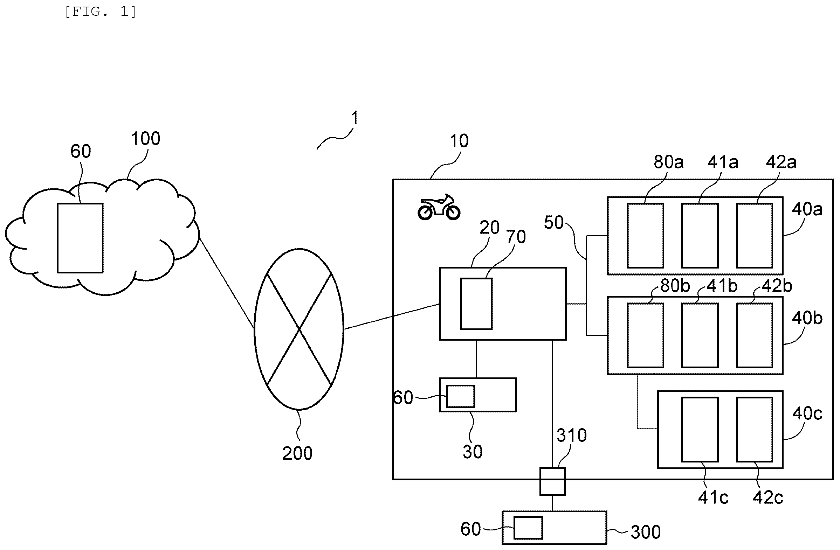

Fig. 1 is a diagram illustrating a vehicle 10 and a function management system 1 according to an embodiment. In Fig. 1, a saddle-type vehicle (e.g., motorcycle) is illustrated as an example of the vehicle 10. The present invention is suitable for use in a motorcycle in which a space for mounting a high-function ECU is limited. The vehicle 10 includes a gateway 20, a user interface 30, a drive control ECU_A (40a), a brake control ECU_B (40b), a steering control ECU_C (40c), and an in-vehicle network 50. In the following description, the drive control ECU_A (40a), the brake control ECU_B (40b), and the steering control ECU_C (40c) may be collectively referred to as an electronic control device 40. The gateway 20, the user interface 30, and a plurality of electronic control devices 40 are connected to the in-vehicle network 50. For example, a CAN is used as the in-vehicle network 50. The CAN is known as one of communication networks mounted to a vehicle. The gateway 20, the user interface 30, and each electronic control device 40 can exchange data with each other via the in-vehicle network 50. Each electronic control device 40 exchanges data with other electronic control devices 40 via the in-vehicle network 50.

The electronic control device 40 is an in-vehicle computer provided to the vehicle 10. The electronic control device 40 includes a plurality of ECUs having different functions, such as the drive control ECU_A (40a), the brake control ECU_B (40b), and the steering control ECU_C (40c). Depending on the type of a vehicle control function to be executed, one function may be implemented by simultaneously controlling the plurality of electronic control devices 40. For example, in order to implement an emergency vehicle stop function that causes the vehicle to emergently stop by the side of a road, it is necessary to simultaneously control the brake control ECU_B (40b) and the steering control ECU_C (40c). In addition, in performing a traction control for the vehicle, it is necessary to simultaneously control the drive control ECU_A (40a) and the brake control ECU_B (40b).

The electronic control device 40 includes an execution unit 80, a central processing unit (CPU) 41, and a non-volatile memory 42. In the following description, respective execution units, CPUs, and non-volatile memories of the drive control ECU_A (40a), the brake control ECU_B (40b), and the steering control ECU_C (40c) are denoted by reference signs with a to c as in Fig. 1. The CPU 41 executes the software installed to the electronic control device 40. The software is a computer program. The non-volatile memory 42 stores the software to be executed by the electronic control device 40, data, and the like. In addition, the non-volatile memory 42 stores functional state information that enables or disables the execution of each software by the CPU. The non-volatile memory 42 includes a read-only memory (ROM), a random access memory (RAM), a flash memory, or the like.

The gateway 20 communicates with a server apparatus 100 via a wireless communication network 200 including a public wireless communication network typified by an Internet network, a mobile phone network, and the like.

In addition, the gateway 20 can also exchange data with a diagnostic tester 300 via a diagnostic connector 310.

The gateway 20 includes a processing unit 70 as a functional component. The processing unit 70 determines, based on metadata included in a message transmitted from the server apparatus 100, the electronic control device 40 which is the destination address of the message.

The server apparatus 100 stores, as a functional component, a management unit 60 that generates a message for revising the software of the electronic control device 40 in response to an input from a mobile terminal of a user (not illustrated) or the like. Revising the software is a concept including update, addition, and deletion of the software, resetting of parameters, and the like.

The user can make an input through the user interface 30 mounted to the vehicle 10 or the diagnostic tester 300. In this case, the management unit 60 is preferably stored in the user interface 30 or the diagnostic tester 300.

The server apparatus 100 has a function of managing the updated software and distributing the updated software in response to a request of the user input from the mobile terminal. The updated software is installed from the server apparatus 100 to the electronic control device 40 in accordance with an instruction from the mobile terminal.

The diagnostic tester 300 is a diagnostic device that can read a defective part of the software of the electronic control device 40, revise the software in the non-volatile memory, perform a simulation test, and the like.

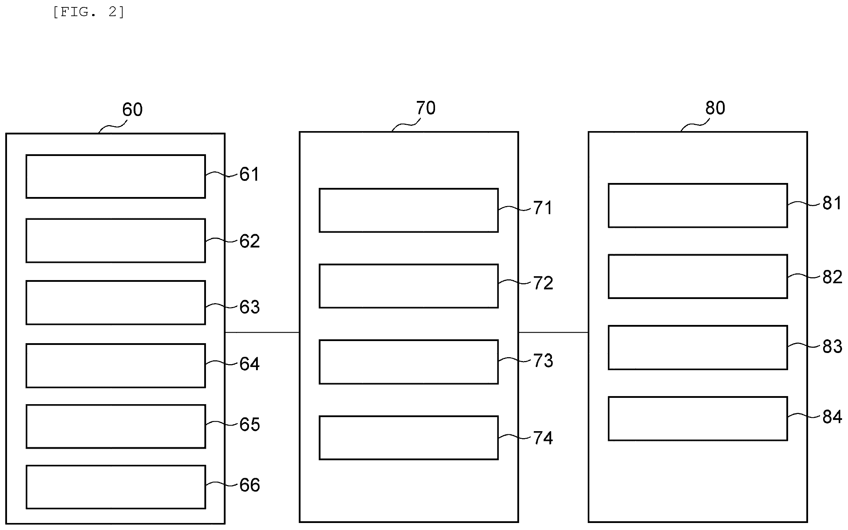

Fig. 2 is a block diagram schematically illustrating respective main configurations of the management unit 60, the processing unit 70, and the execution unit 80.

The management unit 60 includes an interface 61, a message generation section 62, an encryption section 63, an acquisition section 64, a determination section 65, and a storage section 66 as functional components. The message generation section 62 constitutes a data generation part, and the encryption section 63 constitutes a code generation part.

The message generation section 62 generates a message that reflects a request from the user recognized by the interface 61. Specifically, a message for revising a part or all of the software of the electronic control device 40 is generated. The message includes metadata that determines the electronic control device 40 which is the destination address of the message, and core data for revising a part or all of the software of the electronic control device 40. The message generated by the message generation section 62 is stored in the storage section 66 with a predetermined effective period (e.g., 10 minutes).

In generating a message, the standard specifications for diagnostic messages such as Keyword Protocol (KWP), Unified Diagnostic Protocol (UDS), On-Board Diagnostics (OBD2), World Wide Harmonized-OBD (WWH-OBD), and J1939 may be used. This makes it possible to generate varieties of commands including, for example, a command for reading data, a command for updating data, and a command for rewriting a functional state, in accordance with the standard specifications.

When a function of the vehicle is achieved by software implemented in two or more different electronic control devices, the message generation section may generate a message executable in the execution unit 80 of one selected electronic control device 40 and transmit the message to the selected execution unit 80. For example, in revising the software for achieving the emergency vehicle stop function, the message generation section 62 may transmit a message to the execution unit 80b of one selected brake control ECU_B (40b), and the execution unit 80b may revise the software in the non-volatile memory 42b of the brake control ECU_B (40b) and revise the software in the non-volatile memory 42c of the steering control ECU_C (40c).

In another example in which a function of the vehicle is achieved by software implemented in two or more different electronic control devices, the message generation section 62 of the management unit 60 generates messages to be respectively executed in the electronic control devices 40. For example, in revising the software for achieving the above-described traction control function, the message generation section 62 of the management unit 60 may separately generate a message to be executed by the execution unit 80a of the drive control ECU_A (40a) and a message to be executed by the execution unit 80b of the brake control ECU_B (40b).

The core data includes at least version information of a message, functional state information, a function ID, a serial number, a valid type, valid data, and a vehicle identification number (VIN).

The functional state information is information for locking or unlocking a function of the vehicle implemented by the software. In the case of unlocking, additional different mode information may be included. For example, when the function implemented by the software to be revised is the traction control, information for setting parameters in accordance with environment may be included, where the parameters are set such that, on the assumption that 0 = lock and other than 0 corresponds to "unlock", 1 = normal road surface, 2 = rainy road, 3 = off-road, 4 = snowy road.

The function ID is an identification number of a function of the vehicle that is to be locked or unlocked.

The serial number is a serial number of a message. This is used for preventing the same massage from being used again.

The valid type is information indicating the conditions under which the revision of the software is valid. For example, when there is a restriction on a travel distance, a vehicle age, or the like, such a restriction may be included in the valid type. For the valid data, when a travel distance is selected as valid type information, a specific travel distance is set as the valid data.

The vehicle identification number (VIN) is a unique code including a serial number used in the automotive industry to identify an individual vehicle. This information ensures that a message is transmitted to an appropriate vehicle.

The metadata includes information for determining the destination address of a message. For example, a CAN-ID or an ECU-ID, each of which is a diagnostic identifier, is available.

The encryption section 63 encrypts the message generated by the message generation section 62 using a public key stored in the storage section 66.

The encryption section 63 may encrypt the message generated by the message generation section 62 using a MAC key (encryption key) stored in the storage section 66 and generate a message authentication code (hereinafter simply referred to as "Message Authentication Code (MAC)") using the message as original data. The MAC generated by the encryption section 63 constitutes an authentication code, and the encryption section 63 generates a MAC (authentication code) for authentication in the execution unit 80.

In this case, the MAC generated by the encryption section 63 is generated using a publicly known MAC algorithm. Examples of the publicly known MAC algorithm include a hash function method (HMAC) and a block cipher algorithm method (OMAC/CMAC, CBC-MAC, PMAC), and the encryption section 63 uses these to encrypt data using a MAC key.

The encryption section 63 encrypts only the core data in the message and does not encrypt the metadata.

The acquisition section 64 acquires current functional state information subject to software revision before transmitting the message generated by the message generation section 62 to the processing unit. Specifically, the acquisition section 64 acquires software version information, state information indicating whether a target function is locked or unlocked, or the like at the present time.

The determination section 65 compares the request from the user recognized by the interface 61 and the functional state information acquired by the acquisition section 64 to determine whether to create a message in response to the request from the user.

The processing unit 70 includes an ECU information management section 71, an address management section 72, a transmission section 73, and a storage section 74 as functional components.

The ECU information management section 71 acquires the version information of software of the corresponding electronic control device 40 and the state of the function implemented by the software from the storage section 74 in response to a request from the acquisition section 64 or in a predetermined cycle. Since the processing unit 70 and the execution unit 80 are connected through the in-vehicle network, the version information of the updated software of the electronic control device 40 stored in the storage section 84 of the execution unit 80 and the state of the corresponding function are available in the storage section 74. The state of a function refers to a state, such as whether the software that implements the function is active, whether the function is restricted, or whether the revision of the software is prohibited.

The address management section 72 determines the address of the electronic control device 40 based on the metadata included in the message transmitted from the management unit 60. Specifically, the metadata includes an ID specific to the electronic control device 40 in which the execution unit 80 is stored, such as a CAN-ID or an ECU-ID, for example. Since the address management section 72 determines the address of the electronic control device 40 by reading unencrypted metadata, it is not necessary to decrypt encrypted core data in the processing unit 70. The core data is decrypted in the execution unit 80 as will be described below. Accordingly, determination of an address and transmission to the address can be accelerated.

The transmission section 73 transmits the message to the electronic control device 40 determined by the address management section 72. At this time, the transmission section 73 may be configured to transmit only the encrypted core data out of the metadata and the core data included in the message. This can reduce the processing load in the execution unit.

Next, the execution unit 80 will be described. The execution unit 80 includes a decryption section 81, an authentication section 82, an output section 83, and a storage section 84 as functional components.

The decryption section 81 decrypts the encrypted message transmitted from the processing unit 70 using a private key stored in the storage section 84. The decryption section 81 decrypts the message using the private key that corresponds to the public key used by the encryption section 63 of the management unit 60 and is stored in the storage section 84.

Alternatively, the decryption section 81 may decrypt the message transmitted from the processing unit 70 using a MAC key stored in the storage section 84 so as to restore the MAC to the original data before encryption. That is, the decryption section 81 decrypts the MAC to restore the message of the original data. The decryption section 81 decrypts the MAC using the same encryption method of the MAC algorithm as used in the management unit 60. For this reason, in the management unit 60 and the execution unit 80, the method of the MAC algorithm used for encryption and decryption is set in advance. By decrypting the MAC, authentication in the authentication section 82 can be performed.

When it is determined that the transmitted message and the decrypted message match each other, the authentication section 82 authenticates that the source of the message is valid. On the other hand, when it is determined by the authentication section 82 that the transmitted message and the decrypted message do not match each other, the authentication section 82 does not authenticate the validity of the source. In this case, the authentication section 82 cuts off the connection with the processing unit 70.

When the message is authenticated, the storage section 84 stores the message transmitted from the processing unit 70.

The output section 83 overwrites the current software stored in the non-volatile memory 42 of the electronic control device 40 in accordance with the message stored in the storage section 84 during the next power cycle of the vehicle 10.

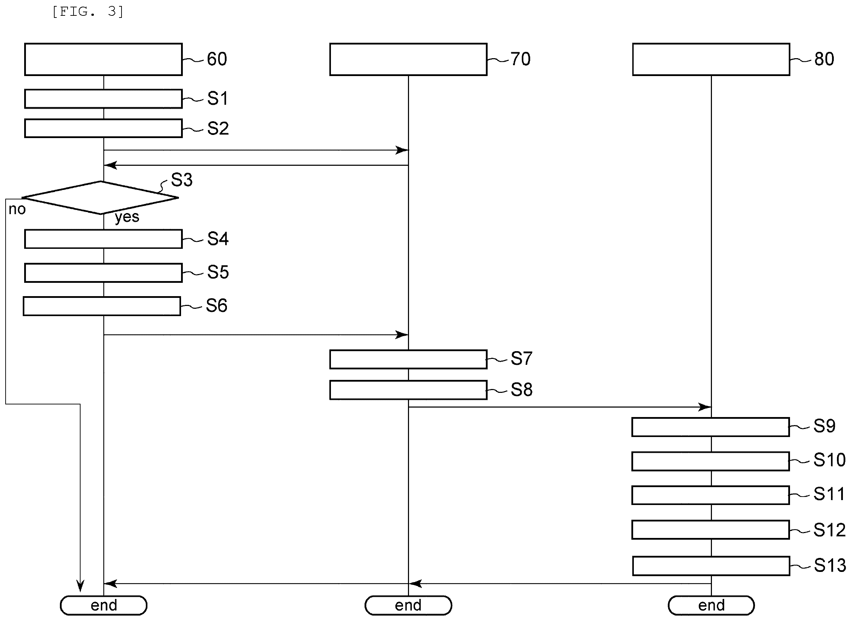

Next, an operation of the first embodiment will be described with reference to Fig. 3. Fig. 3 is a sequence chart of a function management method of the first embodiment.

(Step S1) The user operates an input unit (not illustrated) of any one of the mobile terminal, the user interface 30, and the diagnostic tester 300 to request the revision of the software which is implemented to the electronic control devices 40 for achieving a function of the vehicle.

(Step S2) The acquisition section 64 acquires state information of an ECU stored in the storage section 74 of the processing unit 70. Specifically, the acquisition section 64 acquires software version information of the ECU to which a message is to be transmitted, state information indicating whether a function to be achieved by the software is locked or unlocked, or the like.

(Step S3) The determination section 65 compares the request from the user acquired in step S1 and the state information of the ECU obtained from the electronic control device 40 in step S2 to determine whether to create a message in response to the request from the user. In the determination, at least the following points are considered:
- whether the software version requested to be updated and the software version currently executed by the electronic control device 40 are identical, and
- whether the function requested to be updated corresponds a function prohibited from being rewritten.

When it is determined that the functional state should not be changed in accordance with the message (no), a message stating "Already updated" or "Change prohibited" is transmitted to the mobile terminal of the user or the like, and the processing is terminated.

(Step S4) When the determination section determines in step S3 that a message should be created in accordance with the request of the user, the message generation section 62 generates a message for revising the software based on the input made by the user in step S1. The message generated by the message generation section 62 is temporarily stored in the storage section 66 of the management unit 60 with a predetermined effective period (e.g., 10 minutes).

(Step S5) The encryption section 63 encrypts a part corresponding to core data out of the message generated by the message generation section 62 using a MAC key (encryption key) stored in the storage section 66, and generates a message authentication code using the core data included in the message as original data. It should be noted that metadata included in the message is not encrypted.

(Step S6) The management unit 60 transmits the message including the core data encrypted in step S5 and the metadata which is not encrypted to the processing unit 70.

(Step S7) The address management section 72 of the processing unit 70 determines the address of the electronic control device 40 based on the metadata included in the message transmitted from the management unit 60 in step S6. Since the metadata includes a CAN-ID or an ECU-ID, the electronic control device 40 whose software should be revised can be determined. In addition, since the metadata is not encrypted, the address of the ECU can be determined without the need to decrypt the metadata in the processing unit 70.

(Step S8) The transmission section 73 transmits the message to the electronic control device 40 determined by the address management section 72 in step S7. The transmission section 73 transmits only the encrypted core data out of the metadata and the core data included in the message.

(Step S9) The decryption section 81 of the execution unit 80 decrypts the MAC using a MAC key stored in the storage section 84 for the message received from the management unit 60. When the MAC cannot be decrypted by a predetermined algorithm (no), an error message is transmitted to the management unit 60, and the processing is terminated.

(Step S10) When it is determined that the transmitted message and the decrypted message match each other, the authentication section 82 of the execution unit 80 authenticates that the source of the message is valid. On the other hand, when it is determined by the authentication section 82 that the transmitted message and the decrypted message do not match each other, the authentication section 82 does not authenticate the validity of the source, and cut off the connection with the processing unit 70.

(Step S11) When the message is authenticated by the authentication section 82 in step S10, the decrypted message is once stored in the storage section 84 before the revision of the software of the electronic control device 40 is executed.

(Step S12) The execution unit 80 updates the functional state of functional state management data stored in the non-volatile memory 42 of the electronic control device 40 based on the message stored in the storage section 84 during the next power cycle in the vehicle 10 (i.e., vehicle power on/off, or ignition on/off). In updating, the update may be executed only when the vehicle is stopped or parked. Whether the vehicle is in the stopped state or the parked state can be determined, for example, by evaluating a signal of a vehicle speed sensor, or, in a case where the vehicle is a straddle-type vehicle, by evaluating a signal of a sensor that detects the state of a stand used for parking the straddle-type vehicle.

(Step S13) Upon completion of the update processing of the functional state, the execution unit 80 transmits an update completion notification to the processing unit 70. Upon receipt of the update completion notification from the execution unit 80, the processing unit 70 transmits the update completion notification of the functional state of the electronic control devices 40 to the management unit 60. Accordingly, the user can confirm the completion of the update of the functional state.

It should be noted that the update completion notification in step S13 may be executed, or is not necessarily executed. In addition, the update completion notification may be transmitted from the processing unit 70 to the user interface 30.

According to the first embodiment described above, the electronic control device to which a message is to be transmitted is determined based on unencrypted metadata included in the message, and the execution unit having received the message decrypts and authenticates the message.

This makes it possible to significantly reduce the frequency of decryption and authentication at each node on the vehicle side, thereby accelerating the process. In addition, since a public key is used to encrypt core data, a security aspect can be enhanced.

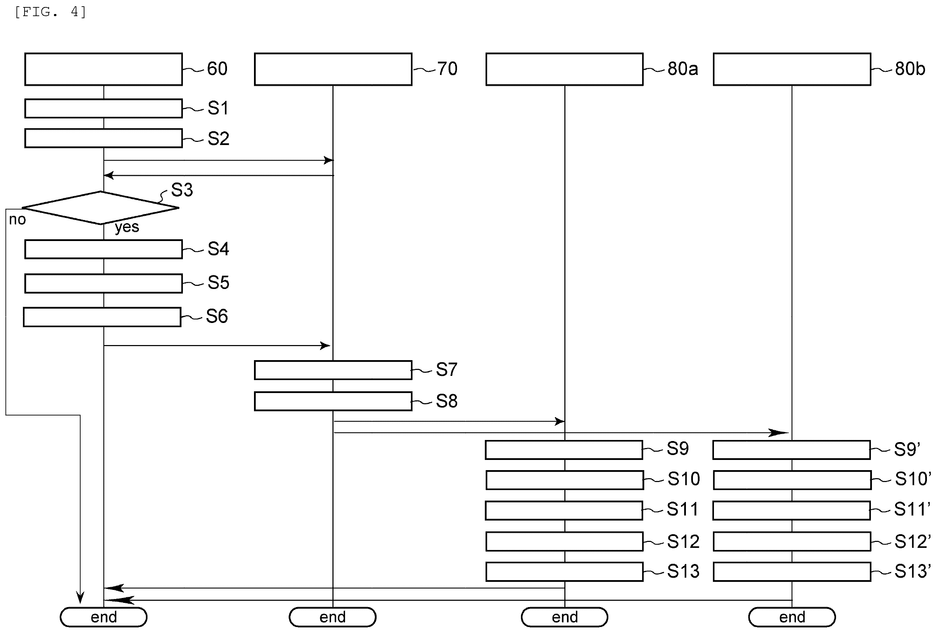

Next, an operation of a second embodiment in which a function is executed using at least two electronic control devices will be described with reference to Fig. 4. Fig. 4 is a sequence chart of a function management method of the second embodiment.

(Step S1) The user operates an input unit (not illustrated) of any one of the mobile terminal, the user interface 30, and the diagnostic tester 300 to request the revision of the software which is implemented to the electronic control devices 40 for achieving a function of the vehicle. As an example, in order to update the traction control function, the software in the drive control ECU_A (40a) and the brake control ECU_B (40b) is requested to be updated.

(Step S2) The acquisition section 64 acquires state information of the ECUs stored in the storage section 74 of the processing unit 70. Specifically, the acquisition section 64 acquires software version information related to the traction control function of the drive control ECU_A (40a) and the brake control ECU_B (40b), state information indicating whether a function to be implemented by the software is locked or unlocked, or the like.

(Step S3) The determination section 65 compares the request from the user acquired in step S1 and the state information of the ECUs obtained from the electronic control devices 40 in step S2 to determine whether to create a message in response to the request from the user. In the determination, at least the following points are considered:
- whether the software version requested to be updated and the software version currently executed by the electronic control devices 40 are identical, and
- whether the function requested to be updated corresponds a function prohibited from being rewritten.

When it is determined that the functional state should not be changed in accordance with the message (no), a message stating "Already updated" or "Change prohibited" is transmitted to the mobile terminal of the user or the like, and the processing is terminated.

(Step S4) When the determination section determines in step S3 that a message should be created in accordance with the request of the user, the message generation section 62 generates a message for revising the software based on the input made by the user in step S1. In the second embodiment, since the target function is achieved by the software implemented in two electronic control devices, the message generation section separately generates a message A to be transmitted to the execution unit 80a of the ECU_A (40a) and a message B to be transmitted to the execution unit 80b of the ECU_B (40b). The correspondence relationship between the ECU used for each function ID and the function in the ECU is established in identification information, and thus the message generation section 62 can generate separate messages for the respective electronic control devices by referring to the identification information.

The messages generated by the message generation section 62 are temporarily stored in the storage section 66 of the management unit 60 with a predetermined effective period (e.g., 10 minutes).

(Step S5) The encryption section 63 encrypts respective parts corresponding to core data out of the message A and the message B generated by the message generation section 62 using a MAC key (encryption key) stored in the storage section 66, and generates message authentication codes using the core data included in the messages as original data. It should be noted that metadata included in the messages is not necessarily encrypted.

(Step S6) The management unit 60 transmits the message A and the message B encrypted in step S5 to the processing unit 70.

(Step S7) The address management section 72 of the processing unit 70 determines the addresses of the electronic control devices 40 based on the metadata included in the messages transmitted from the management unit 60 in step S6. Since the metadata of the message A includes a CAN-ID or an ECU-ID related to the ECU_A (40a) and the metadata of the message B includes a CAN-ID or an ECU-ID related to the ECU_B (40b), the electronic control devices 40 whose software should be revised can be determined.

(Step S8) The transmission section 73 transmits the messages to the electronic control devices 40 determined by the address management section 72 in step S7. The message A is transmitted to the execution unit 80a of the ECU_A (40a) and the message B is transmitted to the execution unit 80b of the ECU_B (40b). The transmission section 73 transmits only the encrypted core data out of the metadata and the core data included in the messages.

(Step S9, S9') The decryption sections of the execution unit 80a and the execution unit 80b respectively decrypt the MACs using a MAC key stored in the respective storage sections of the execution units 80a, 80b for the messages received from the management unit 60. When the MACs cannot be decrypted by a predetermined algorithm (no), an error message is transmitted to the management unit 60 and the processing is terminated.

(Step S10, S10') When it is determined that the transmitted messages and the decrypted messages match each other, the authentication sections of the execution units 80a, 80b authenticate that the sources of the messages are valid. On the other hand, when it is determined by the authentication sections that the transmitted messages and the decrypted messages do not match each other, the authentication sections do not authenticate the validity of the sources, and cut off the connection with the processing unit 70.

(Step S11, S11') When the messages are authenticated by the authentication sections in step S10, S10', the decrypted messages are once stored in the respective storage sections of the execution units before the revision of the software of the ECU_A (40a) and the software of the ECU_B (40b) is executed.

(Step S12, S12') The execution units 80a and 80b revise the corresponding software stored in the non-volatile memories 42a and 42b of the ECU_A (40a) and the ECU_B (40b) based on the messages stored in the storage sections during the next power cycle in the vehicle 10 (i.e., vehicle power on/off, or ignition on/off). In revising, the revision may be executed only when the vehicle is stopped or parked. Whether the vehicle is in the stopped state or the parked state can be determined, for example, by evaluating a signal of a vehicle speed sensor, or, in a case where the vehicle is a straddle-type vehicle, by evaluating a signal of a sensor that detects the state of a stand used for parking the straddle-type vehicle.

(Step S13) Upon completion of the revision processing, each of the execution units 80a and 80b transmits a revision completion notification to the processing unit 70. Upon receipt of the revision completion notifications from the execution units 80, the processing unit 70 transmits the revision completion notifications of the functional states of the electronic control devices 40 to the management unit 60. Accordingly, the user can confirm the completion of the revision of the functional state.

It should be noted that the revision completion notifications in step S13 may be executed, or is not necessarily executed. In addition, the revision completion notifications may be transmitted from the processing unit 70 to the user interface 30.

According to the second embodiment described above, acommand generation section generates a separate command for each electronic control device.

As a result, when a function is executed by a plurality of electronic control devices, the execution of the command can be completed in each electronic control device, and the security can be further enhanced.

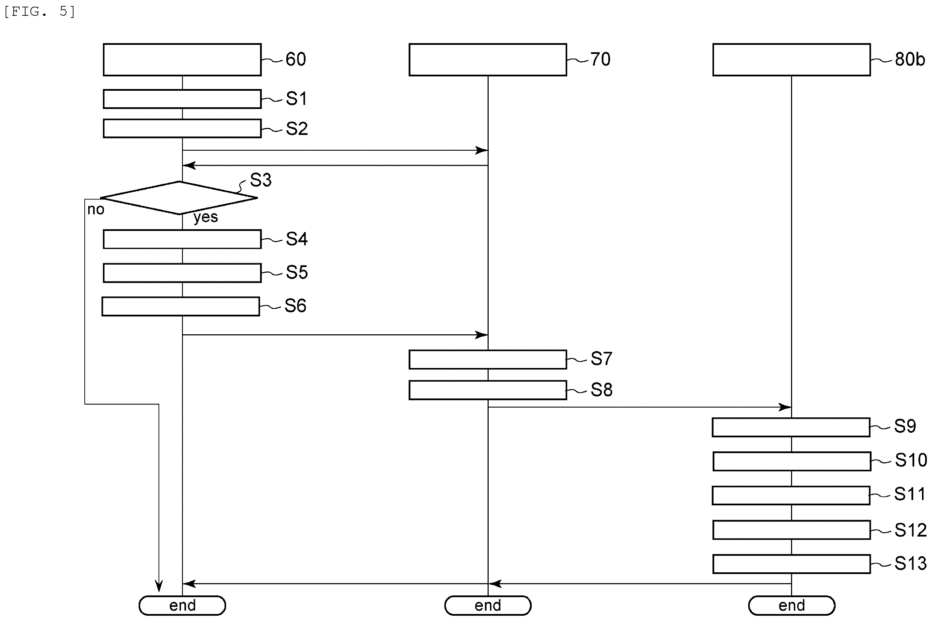

Next, an operation of a third embodiment in which a function is executed using at least two electronic control devices will be described with reference to Fig. 5. Fig. 5 is a sequence chart of a function management method of the third embodiment.

(Step S1) The user operates an input unit (not illustrated) of any one of the mobile terminal, the user interface 30, and the diagnostic tester 300 to request the revision of the software which is implemented in the electronic control devices 40 for achieving a function of the vehicle. As an example, in order to update the emergency vehicle stop function, the software in the brake control ECU_B (40b) and the steering control ECU_C (40c) is requested to be updated.

(Step S2) The acquisition section 64 acquires state information of ECUs stored in the storage section 74 of the processing unit 70. Specifically, the acquisition section 64 acquires software version information related to the emergency vehicle stop function of the brake control ECU_B (40b) and the steering control ECU_C (40c), state information indicating whether a function to be implemented by the software is locked or unlocked, or the like.

(Step S3) The determination section 65 compares the request from the user acquired in step S1 and the state information of the ECUs obtained from the electronic control devices 40 in step S2 to determine whether to create a message in response to the request from the user. In the determination, at least the following points are considered:
- whether the software version requested to be updated and the software version currently executed by the electronic control devices 40 are identical, and
- whether the function requested to be updated corresponds a function prohibited from being rewritten.

When it is determined that the functional state should not be changed in accordance with the message (no), a message stating "Already updated" or "Change prohibited" is transmitted to the mobile terminal of the user or the like, and the processing is terminated.

(Step S4) When the determination section determines in step S3 that a message should be created in accordance with the request of the user, the message generation section 62 generates a message for revising the software based on the input made by the user in step S1. In the third embodiment, only the metadata of the ECU_B (40b) is included as address information included in the message, and the core data executed in the ECU_B (40b) and the ECU_C (40c) are included as the core data. The message generated by the message generation section 62 is temporarily stored in the storage section 66 of the management unit 60 with a predetermined effective period (e.g., 10 minutes).

(Step S5) The encryption section 63 encrypts a part corresponding to the core data out of the message generated by the message generation section 62 using a MAC key (encryption key) stored in the storage section 66, and generates a message authentication code using the core data included in the message as original data. It should be noted that metadata included in the message is not necessarily encrypted.

(Step S6) The management unit 60 transmits the message encrypted in step S5 to the processing unit 70.

(Step S7) The address management section 72 of the processing unit 70 determines the address of the electronic control device 40 based on the metadata included in the message transmitted from the management unit 60 in step S6. Since the metadata of the message includes the CAN-ID or the ECU-ID related to the ECU_B (40b), the address management section 72 determines the ECU_B (40b) as the destination address of the message.

(Step S8) The transmission section 73 transmits the message to the electronic control device 40 determined by the address management section 72 in step S7. In the present embodiment, the message is transmitted to the execution unit 80b of the ECU_B (40b). The transmission section 73 transmits only the encrypted core data out of the metadata and the core data included in the message.

(Step S9) The decryption section of the execution unit 80b decrypts the MAC using a MAC key stored in the storage section of the execution unit 80b for the message received from the management unit 60. When the MAC cannot be decrypted by a predetermined algorithm (no), an error message is transmitted to the management unit 60 and the processing is terminated.

(Step S10) When it is determined that the transmitted message and the decrypted message match each other, the authentication section of the execution unit 80b authenticates that the source of the message is valid. On the other hand, when it is determined by the authentication section that the transmitted message and the decrypted message do not match each other, the authentication section does not authenticate the validity of the source, and cuts off the connection with the processing unit 70.

(Step S11) When the message is authenticated by the authentication section in step S10, the decrypted message is once stored in the storage section of the execution unit 80b before the revision of the software of the ECU_B (40b) and the ECU_C (40c) is executed.

(Step S12) The execution unit 80b revises the corresponding software stored in the non-volatile memories 42b, 42c of the ECU_B (40b) and the ECU_C (40c) based on the message stored in the storage section during the next power cycle in the vehicle 10. The execution unit 80b refers to function ID information included in the core data to separately execute the revision of the software executed in the non-volatile memory 42b of the ECU_B (40b) and the revision of the software executed in the non-volatile memory 42c of the ECU_C (40c). In revising, the revision may be executed only when the vehicle is stopped or parked. Whether the vehicle is in the stopped state or the parked state can be determined, for example, by evaluating a signal of a vehicle speed sensor, or, in a case where the vehicle is a straddle-type vehicle, by evaluating a signal of a sensor that detects the state of a stand used for parking the straddle-type vehicle.

(Step S13) Upon completion of the revision processing, the execution unit 80b transmits a revision completion notification to the processing unit 70. Upon receipt of the revision completion notification from the execution unit 80b, the processing unit 70 transmits the revision completion notification of the functional state of the electronic control devices 40 to the management unit 60. Accordingly, the user can confirm the completion of the revision of the functional state.

According to the third embodiment described above, the execution unit of selected one electronic control device executes the revision of the software in the plurality of electronic control devices.

Accordingly, by giving an authority to a selected execution unit, the function management system can also be applied to an electronic control device including no execution unit.

### Reference Signs List

1: Function management system
10: Vehicle
20: Gateway
30: User interface
40: Electronic control device
41: CPU
42: Non-volatile memory
50: In-vehicle network
60: Management unit
70: Processing unit
80: Execution unit
100: Server apparatus
200: Wireless communication network
300: Diagnostic tester

## Claims

1. A function management system (1) comprising:
a management unit (60) configured to generate, in response to an input by a user, a message for revising software implemented in an electronic control device (40) constituting an in-vehicle network mounted to a vehicle;
a processing unit (70) configured to determine a destination address of the message using metadata included in the message; and
an execution unit (80) configured to receive the message and execute revision of the software based on core data included in the message,
the management unit (60) generating the message after decrypting the metadata and encrypting the core data, and
the processing unit (70) transmitting the core data to the execution unit (80) of the electronic control device (40) determined as the destination address.

2. The function management system (1) according to claim 1, wherein the management unit includes an encryption section (63) configured to encrypt the core data using a public key.

3. The function management system (1) according to claim 1, wherein the management unit (60) includes an acquisition unit (64) configured to acquire software version information of the electronic control device determined using the metadata before transmitting the message.

4. The function management system (1) according to claim 1, wherein the management unit (60) includes an acquisition unit (64) configured to acquire a functional state of a function of the vehicle before transmitting the message, the function being achieved by the software.

5. The function management system (1) according to claim 1, wherein the execution unit (80) executes the revision of the software during a next power cycle of the vehicle after acquisition of the message.

6. The function management system (1) according to claim 1, wherein the execution unit (80) executes the revision of the software after detecting a state in which the vehicle is stopped or parked.

7. The function management system (1) according to claim 1, wherein the core data includes a vehicle identification number identifying the vehicle.

8. The function management system (1) according to claim 1, wherein the core data includes a serial number of the message.

9. The function management system (1) according to claim 1, wherein the revision of the software includes setting of a parameter in accordance with an environment.

10. The function management system (1) according to claim 1, wherein, when a function of the vehicle is achieved by a plurality of pieces of software, which is included in the software, implemented in two or more different electronic control devices, which are included in the electronic control device, the management unit separately generates the message for revising the software executed by the execution unit of each of the electronic control devices.

11. The function management system (1) according to claim 1, wherein, when a function of the vehicle is achieved by a plurality of pieces of software, which is included in the software, implemented in two or more different electronic control devices, which are included in the electronic control device, the execution unit of the electronic control device determined as the destination address by the processing unit executes the revision of the software.

12. The function management system (1) according to claim 1, wherein the vehicle is a saddle-type vehicle (10).

13. A function management method comprising:
a message generation step of generating, in response to an input by a user, a message for revising software implemented in an electronic control device constituting an in-vehicle network mounted to a vehicle;
a destination address determination step of determining a destination address of the message using metadata included in the message;
a transmission step of transmitting the message to the destination address determined in the destination address determination step; and
an execution step of executing revision of the software in accordance with core data included in the message,
in the message generation step, the message being generated after decrypting the metadata by which the destination address of the message is determined and encrypting the core data, and
in the transmission step, the core data being transmitted to an execution unit of the electronic control device determined as the destination address.
